Europäisches Patentamt

European Patent Office

Office européen des brevets

(19)

(11) **EP 1 394 641 A1**

(12) **EUROPÄISCHE PATENTANMELDUNG**

(43) Veröffentlichungstag:
**03.03.2004 Patentblatt 2004/10**

(51) Int Cl.⁷: **G04G 5/00**, H04B 7/26

(21) Anmeldenummer: **02019589.7**

(22) Anmeldetag: **02.09.2002**

| | |
|---|---|
| (84) Benannte Vertragsstaaten:<br>**AT BE BG CH CY CZ DE DK EE ES FI FR GB GR IE IT LI LU MC NL PT SE SK TR**<br>Benannte Erstreckungsstaaten:<br>**AL LT LV MK RO SI** | (71) Anmelder: **SIEMENS AKTIENGESELLSCHAFT**<br>**80333 München (DE)**<br><br>(72) Erfinder: **Laubenbacher, Alois**<br>**82205 Gilching (DE)** |

(54) **Verfahren zur übertragung einer Echtzeitreferenz zu einer Mobilstation**

(57)    In einem Funkkommunikationssystem werden Nachrichten zwischen einem Funkzugangsnetz und einer Mobilstation unter Verwendung von Zeitrahmen übertragen. In dem Funkzugangsnetz wird eine absolute Zeit bestimmt, der eine Zeitrahmeninformation zugeordnet wird. Zwischen dem Funkzugangsnetz und der Mobilstation (MS) wird mindestens eine Signalisierungsnachricht ausgetauscht, in der der Mobilstation (MS) die absolute Zeit und die Zeitrahmeninformation übermittelt werden.

FIG 2

MSC    BSC    BTS    MS

call request

Channel Establish

Channel Activation (absolute time)

Channel Activation_ACK
(absolute time, related frame number)

BTS_time for channel establishment
(absolute time, related frame number)

establish channel
(absolute time, related frame number)

EP 1 394 641 A1

Printed by Jouve, 75001 PARIS (FR)

**Beschreibung**

Funkkommunikationssysteme dienen der Übertragung von Informationen, Sprache oder Daten, mit Hilfe von elektromagnetischen Wellen über eine Funkschnittstelle zwischen einer sendenden und einer empfangenden Funkstation. Verschiedene Teilnehmer werden dabei durch unterschiedliche physikalische Kanäle, in die die Funkschnittstelle organisiert ist, unterschieden. Abhängig von dem verwendeten Zugriffsverfahren kann ein physikalischer Kanal durch einen schmalbandigen Frequenzbereich, einen Zeitschlitz und/oder einen Spreizcode gebildet werden. Darüber hinaus wird die Funkschnittstelle vielfach durch Verwendung von Zeitrahmen organisiert.

Bekannte Funkkommunikationssysteme, wie zum Beispiel ein GSM-Mobilfunknetz oder ein UMTS-System, umfassen ein Funkzugangsnetz, über das eine Nachrichtenverbindung über eine Funkschnittstelle zu Mobilstationen aufgebaut werden kann. Bei dem bekannten GSM-Mobilfunknetz umfasst das Funkzugangsnetz eine Vielzahl von Mobilvermittlungsstellen, die untereinander vernetzt sind und die einen Zugang zu einem Festnetz herstellen. Ferner sind diese Mobilvermittlungsstellen mit mindestens einer Basisstationssteuerung (Base Station Controller BSC) verbunden. Die Basisstationssteuerung ermöglicht eine Verbindung zu mindestens einer Basisstation (Base Transceiver Station BTS) und nimmt die Verwaltung der funktechnischen Ressourcen der angeschlossenen Basisstationen vor. Eine solche Basisstation ist eine Funkstation, die über die Funkschnittstelle die Nachrichtenverbindung zu den Mobilstationen aufbaut.

In einem GSM-Mobilfunknetz wird der Nachrichtenverbindung ein Zeitschlitz eines Zeitrahmens zugewiesen. Verschiedene Nachrichtenverbindungen werden im Zeitmultiplex übertragen, wobei acht Zeitschlitze einen Zeitrahmen bilden.

Die Mobilstationen sind vielfach mit einer Kalenderfunktion ausgestattet. Dazu umfasst die Mobilstation eine Quarzuhr. Somit hängt die Kalendergenauigkeit sehr stark von der internen Quarzgenauigkeit der Uhr ab. Sie ist bei den meisten Mobilstationen nicht sehr hoch. Ferner ist damit weder eine Einstellung der Uhrzeit, noch eine automatische Umschaltung von Sommer- auf Winterzeit und umgekehrt möglich. Zeitzonen müssen manuell erfasst und eingestellt werden. Bei längerer Leerphase des Akkus oder sonstigen längeren Stromflussunterbrechungen muss der Kalender manuell neu eingestellt werden.

In EP 1 032 186 A2 ist ein Verfahren zur Anzeige einer lokalen Zeit vorgeschlagen worden. Dabei umfasst die Mobilstation eine interne Uhr, die die Zeit zumindest in Stunden und Minuten anzeigt. Ferner umfasst die Mobilstation eine Steuerungseinheit, in der die lokale Zeit ausgehend von einer Information über lokale Zeitdaten berechnet wird. Zwischen der Mobilstation und einem Funkkommunikationssystem wird eine Funkverbindung aufgebaut. Um die angezeigte Zeit an der Mobilstation zu aktualisieren, sendet die Mobilstation eine Anfrage an das Funkkommunikationssystem, die eine Frage nach den lokalen Zeitdaten umfasst. Das Funkkommunikationssystem antwortet mit einer Nachricht, die eine lokale Zeitdateninformation umfasst. Anhand dieser Zeitdateninformation berechnet die Steuereinheit eine Zeitdifferenz zwischen der von der internen Uhr gelieferten Zeit und der lokalen Zeit. Auf der Basis dieser Zeitdifferenz wird die Stundenanzeige in dem Display der Mobilstation geändert. Die Minutenanzeige entspricht weiterhin dem Wert, den die interne Uhr der Mobilstation liefert.

Der Erfindung liegt das Problem zugrunde, ein Verfahren zum Betrieb eines Funkkommunikationssystem anzugeben, bei dem die Genauigkeit einer an einer Mobilstation verfügbaren Zeitinformation verbessert ist.

Dieses Problem wird gelöst durch ein Verfahren gemäß Anspruch 1. Weitere Ausgestaltungen der Erfindung gehen aus den Unteransprüchen hervor.

Beim Betrieb eines Funkkommunikationssystems werden Nachrichten zwischen einem Funkzugangsnetz und einer Mobilstation unter Verwendung von Zeitrahmen übertragen. In dem Funkzugangsnetz wird eine absolute Zeit bestimmt, der eine Zeitrahmeninformation zugeordnet wird. Dadurch wird ein Bezug zwischen der absoluten Zeit und den bei der Nachrichtenübertragung verwendeten Zeitrahmen hergestellt. Zwischen dem Funkzugangsnetz und der Mobilstation wird mindestens eine Signalisierungsnachricht ausgetauscht, in der der Mobilstation die absolute Zeit und die Zeitrahmeninformation übermittelt wird. Auf diese Weise steht in der Mobilstation eine Zeitinformation mit der Genauigkeit der absoluten Zeit sowie der Zeitrahmeninformation zur Verfügung. Da in Funkkommunikationssystemen, in denen Zeitrahmen verwendet werden, stets ein Zeitnormal, häufig ein Frequenznormal, zur Ableitung einer Zeitinformation zur Verfügung steht, und verschiedene Komponenten des Funkkommunikationssystems untereinander synchronisiert werden, entspricht die Genauigkeit der auf diese Weise in der Mobilstation zur Verfügung stehenden Zeitinformation der Genauigkeit, mit der die Zeitrahmen definiert werden. Diese liegt im Bereich von < 5ms.

Es liegt im Rahmen der Erfindung, dass eine erste Netzeinheit des Funkzugangsnetzes eine Zeitinformation aus einem Zeitnormal, beispielsweise einem Frequenznormal, ableitet. Diese Zeitinformation wird von der ersten Netzeinheit an eine zweite Netzeinheit des Funkzugangsnetzes übertragen. Die zweite Netzeinheit bestimmt aus der Zeitinformation unter Berücksichtigung der Übertragungszeit zwischen der ersten Netzeinheit und der zweiten Netzeinheit die absolute Zeit.

Es liegt im Rahmen der Erfindung, dass die erste Netzeinheit eine Mobilvermittlungsstation (Mobile Switching Center MSC) und die zweite Netzeinheit eine Basisstationssteuerung (Base Station Controller BSC) oder eine Basisstation (Base Transceiver Station BTS) ist. Vorzugsweise wird in der Mobilstation eine aktuelle Zeit aus der absoluten Zeit, der Zeitrahmeninformation, einem aktuellen Zeitrahmen und einer vorgegebenen Zeitrahmendauer bestimmt. Dieses kann insbesondere gemäß folgender Formel erfolgen:

$$T_{akt} = T_{abs} + ( FRN_{akt} - FRN_{rel} )* T_{FR}$$

Dabei ist $T_{akt}$ die aktuelle Zeit, $T_{abs}$ die absolute Zeit, $FRN_{akt}$ der aktuelle Zeitrahmen, $FRN_{rel}$ die Zeitrahmeninformation und $T_{FR}$ die Zeitrahmendauer.

Zur Ermittlung einer hochgenauen absoluten Zeit liegt es im Rahmen der Erfindung, dass die zweite Netzeinheit der ersten Netzeinheit nach Erhalt der Zeitinformation jeweils eine Bestätigung sendet. In der ersten Netzeinheit wird eine Zeitdauer zwischen dem Senden der Zeitinformation und dem Empfangen der Bestätigung bestimmt. Die erste Netzeinheit sendet die Zeitinformation und die zweite Netzeinheit die Bestätigung solange, bis die in der ersten Netzeinheit jeweils bestimmte Zeitdauer eine vorgegebene Schwelle unterschreitet. Falls die Zeitdauer die vorgegebene Schwelle unterschreitet, sendet die erste Netzeinheit die zuletzt bestimmte Zeitdauer, die die vorgegebene Schwelle unterschreitet, an die zweite Netzeinheit. Die zweite Netzeinheit bestimmt aus der Zeitinformation und der Zeitdauer die absolute Zeit und ordnet ihr als Zeitrahmeninformation eine Kennung desjenigen Zeitrahmens zu, der der absoluten Zeit entspricht. Auf diese Weise wird eine Genauigkeit der absoluten Zeit von der Hälfte der vorgegebenen Schwelle minus der Signallaufzeit zwischen der ersten Netzeinheit und der zweiten Netzeinheit erzielt. Durch entsprechende Wahl der Schwelle ist somit die erzielbare Genauigkeit einstellbar. Die Schwelle liegt vorzugsweise bei 40 bis 80 ms, vorzugsweise bei 60 ms. Damit wird eine Genauigkeit von mindestens 10 bis 30 ms, vorzugsweise 20 ms erzielt. Dabei wird eine Laufzeit zwischen der ersten Netzeinheit und der zweiten Netzeinheit von 10 ms angenommen. Diese Signallaufzeit ist physikalisch bedingt.

Es liegt im Rahmen der Erfindung, die absolute Zeit und die Zeitrahmeninformation in einer Signalisierungsnachricht zu übermitteln, die zu einem Kanalaufbau, einer Prozedur zur Aktualisierung des Aufenthaltsortes (Location Update), bei einer Anmeldung der Mobilstation an dem Funkkommunikationssystem, zur Übertragung einer SMS (Short Message Service)-Nachricht oder auf Anforderung des Teilnehmers, der die Mobilstation benutzt, übertragen wird. Eine Anforderung des Benutzers kann zum Beispiel über eine spezielle Taste oder eine Menüfunktion erfolgen.

Es liegt im Rahmen der Erfindung, beim Aufbau einer Verbindung zwischen der Mobilstation und dem Funkzugangsnetz die absolute Zeit und die Zeitrahmeninformation zu übertragen. Dabei schickt die Mobilstation eine Verbindungsanfrage an eine Mobilvermittlungsstelle. Die Mobilvermittlungsstelle sendet einer Basisstationssteuerung und die Basisstationssteuerung einer Basisstation jeweils eine Aufforderung zum Kanalaufbau. Dabei bestimmt die Basisstation die absolute Zeit aus einer von der Mobilvermittlungsstation aus einem Frequenz normal abgeleiteten Zeitinformation unter Berücksichtigung der Übertragungszeiten zwischen der Mobilvermittlungsstation und der Basisstationssteuerung sowie der Basisstationssteuerung und der Basisstation. Die Basisstation ordnet der absoluten Zeit als Zeitrahmeninformation eine Kennung des der absoluten Zeit entsprechenden Zeitrahmens zu. Die absolute Zeit und die Zeitinformation werden in einer Signalisierungsnachricht, in der der Kanalaufbau bestätigt wird, von der Basisstation zur Basisstationssteuerung und von der Basisstationssteuerung zur Mobilvermittlungsstelle übertragen. Die Mobilvermittlungsstelle sendet eine Signalisierungsnachricht zur Kanalfestsetzung an die Mobilstation. In dieser Signalisierungsnachricht werden die absolute Zeit und die Zeitinformation mitgesendet.

Das Verfahren ist in jedem Funkkommunikationssystem einsetzbar, in dem Zeitrahmen verwendet werden. Insbesondere ist das Verfahren in einem GSM-, GPRS-, EDGE- oder UMTS-Verfahren einsetzbar. Es wird für das Verfahren keine zusätzliche Hardware im Bereich des Funkzugangsnetzes benötigt, da die Zeit aus dem ohnehin vorhandenen Zeitnormal abgeleitet wird und die Informationen mit Signalisierungsnachrichten verschickt werden. Das Verfahren kann von allen Mobilstationen unterstützt werden. Lediglich zur aktiven Anforderung der absoluten Zeit durch Tastendruck oder Menüauswahl sind geringfügige Änderungen der Mobilstationen erforderlich. Die präzise Zeit in der Mobilstation kann anderen Verbrauchern, wie zum Beispiel PC's, PDA's, Verbraucher im Automatisierungssektor, Verbraucher im Automobilsektor etc. zur Verfügung gestellt werden.

Das erfindungsgemäße Verfahren hat den Vorteil, dass in einem über Mobilfunk betriebenen Endgerät eine Zeitinformation verfügbar ist, die von einer im Netzwerk vorgegebenen absoluten Zeitinformation garantiert um weniger als einen definierbaren Maximalwert abweicht. Der Maximalwert kann unter 30ms liegen.

Im Folgenden wird die Erfindung anhand eines Beispiels, das in den Figuren dargestellt ist, näher erläutert.

Figur 1 zeigt einen Nachrichtenfluss zur Bestimmung der absoluten Zeit.

Figur 2 zeigt einen Nachrichtenfluss zwischen einer Mobilvermittlungsstelle, einer Basisstationssteuerung, einer Basisstation und einer Mobilstation beim Aufbau einer Verbindung.

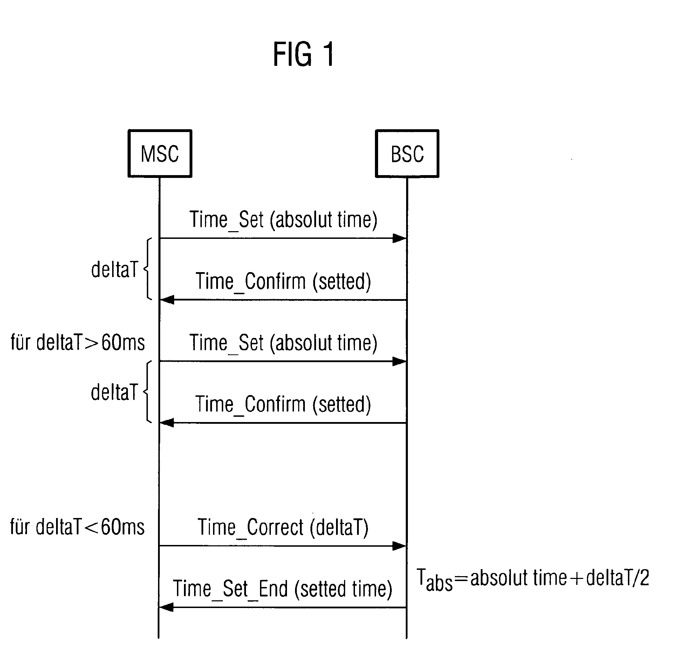

Von einer Mobilvermittlungsstelle MSC wird in einer Nachricht Time_Set (absolut time) einer Basisstationssteuerung BSC eine Zeitinformation absolut time gesendet (siehe Figur 1). Anschließend bestätigt die Basisstationssteuerung BSC in einer Nachricht Time_Confirm (setted) den Empfang der Zeitinformation absolut time. Anschließend wird in der Mobilvermittlungsstation MSC eine Zeitdauer deltaT zwischen der Nachricht Time_Set (absolut time) und der Nachricht Time_Confirm (setted) berechnet. Solange die Zeitdauer deltaT größer als 60 ms ist, wird diese Vorgehensweise wiederholt. Das heisst, es wird sukzessive die Nachricht Time_Set (absolut time) von der Mobilvermittlungsstation MSC zur Basisstationssteuerung BSC und die Nachricht Time_Confirm (setted) von der Basisstationssteuerung BSC zur Mobilvermittlungsstation MSC gesendet und anschließend die Zeitdauer deltaT bestimmt. Dabei wird die Zeitinformation absolut time in der Basisstationssteuerung BSC jeweils zwischengespeichert.

Sobald die Zeitdauer deltaT einen einstellbaren Schwellwert (z.B. 60 ms) unterschreitet, sendet die Mobilvermittlungsstation eine Nachricht Time_Correct (deltaT) an die Basisstationssteuerung BSC. In der Basisstationssteuerung BSC wird daraufhin die absolute Zeit dadurch bestimmt, dass zu der zuletzt abgespeicherten Zeitinformation absolute time die Hälfte der Zeitdauer deltaT, das heisst deltaT/2, hinzuaddiert wird. Diese absolute Zeit setted time wird in einer Nachrichten Time_Set_End (setted time) von der Basisstationssteuerung BSC zu der Mobilvermittlungsstation MSC übertragen.

Da die Zeitdauer deltaT für die Berechnung der absoluten Zeit kleiner als der einstellbare Schwellwert ist, und die Zeitdauer deltaT neben einer Signalverarbeitungszeit in der Mobilvermittlungsstation die reine Signallaufzeit zwischen der Basisstationssteuerung BSC und der Mobilvermittlungsstation MSC und zurück enthält, ergibt sich für die Genauigkeit $deltaT_{abs}$ der auf diese Weise bestimmten absoluten Zeit

$$deltaT_{abs} < (deltaT-(2*10ms))/2.$$

Beträgt der einstellbare Schwellwert 60ms, so ergibt sich für $deltaT_{abs}$ 20ms.

Ist die oben beschriebene Prozedur einmal gelaufen, kann der Basisstationssteuerung BSC die absolute Zeit eigenständig solange weiterführen, wie die Synchronisation zur Mobilvermittlungsstation MSC nicht verloren geht.

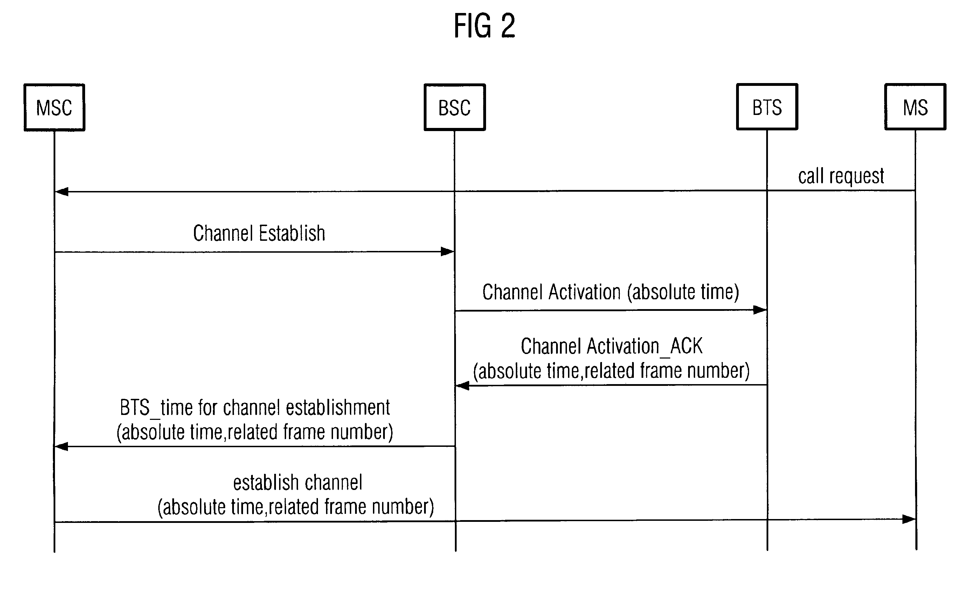

Zum Aufbau einer Verbindung zwischen einer Mobilstation MS und der Mobilvermittlungsstelle MSC wird von der Mobilstation MS an die Mobilvermittlungsstelle MSC eine Verbindungsanfrage call request (= allgemeine Bezeichnung für den message flow zum Aufbau einer Verbindung) gestellt (siehe Figur 2). Die Mobilvermittlungsstelle MSC sendet der Basisstationssteuerung BSC eine Nachricht Channel Establish zum Kanalaufbau, mit der sie die absolute Zeit $T_{abs}$ mitteilt. Nachfolgend sendet die Basisstationsteuerung BSC eine Nachricht Channel Activation (absolut time) zum Kanalaufbau an die Basisstation BTS.

Die Basisstation BTS ordnet der absoluten Zeit eine zugehörige Zeitrahmennummer related frame number zu. Dabei wird in der Basisstation BTS berücksichtigt, dass die Nachricht Channel Activation (absolut time) zwischen der Basisstationssteuerung BSC und der Basisstation BTS eine endliche Laufzeit benötigt. Anschließend sendet die Basisstation BTS eine Nachricht Channel Activation_ACK (absolut time, related frame number) an die Basisstationssteuerung, mit der der Kanalaufbau bestätigt wird und die absolute Zeit, sowie die zugeordnete Zeitrahmeninformation in Form der Kennung des entsprechenden Zeitrahmens mitgesendet wird. Die Basisstationssteuerung BSC sendet darauf eine Nachricht BTS_time for channel establishment (absolut time, related frame number) zur Bestätigung des Kanalaufbaus an die Mobilvermittlungsstelle, mit der die absolute Zeit und die Zeitrahmeninformation mitgesendet werden. Schließlich sendet die Mobilvermittlungsstation MSC eine Signalisierungsnachricht establish channel (absolut time, related frame number) zur Kanalfestsetzung an die Mobilstation, mit der die absolute Zeit und die Zeitrahmeninformation related frame number mitübertragen werden.

Die Mobilstation kann nun die tatsächliche Zeit aus der absoluten Zeit $T_{abs}$, der Zeitrahmeninformation $FRN_{rel}$, der Kennung des tatsächlichen Rahmens $FRN_{akt}$ und der Dauer eines Zeitrahmens $T_{FR}$ berechnen:

$$T_{akt} = T_{abs} + ( FRN_{akt} - FRN_{rel} ) * T_{FR}.$$

Alle hier verwendeten Bezeichnungen sind auf Fig.2 bezogen. Der Verbindungsaufbau, der anhand von Figur 2 beschrieben wurde, kann sowohl für eine Sprachverbindung, als auch für eine Datenverbindung oder die Übertragung einer SMS-Nachricht verwendet werden. Insbesondere kann der Verbindungsaufbau für die Übertragung einer SMS-Nachricht verwendet werden, die eigens zur Übermittlung der genauen Zeit in einem SMS-Center generiert wird.

**Patentansprüche**

1.  Verfahren zum Betrieb eines Funkkommunikationssystems,

    -   bei dem Nachrichten zwischen einem Funkzugangsnetz und einer Mobilstation unter Verwendung von Zeitrahmen übertragen werden,
    -   bei dem in dem Funkzugangsnetz eine absolute Zeit bestimmt wird, der eine Zeitrahmeninformation zugeordnet wird,
    -   bei dem zwischen dem Funkzugangsnetz und der Mobilstation mindestens eine Signalisierungsnachricht ausgetauscht wird, in der der Mobilstation die absolute Zeit und die Zeitrahmeninformation übermittelt wird.

**2.** Verfahren nach Anspruch 1,

- bei dem eine erste Netzeinheit des Funkzugangsnetzes eine Zeitinformation aus einem Zeitnormal ableitet und die Zeitinformation an eine zweite Netzeinheit des Funkzugangsnetzes überträgt,
- bei dem die zweite Netzeinheit die absolute Zeit aus der Zeitinformation unter Berücksichtigung der Übertragungszeit zwischen der ersten Netzeinheit und der zweiten Netzeinheit bestimmt.

**3.** Verfahren nach Anspruch 2,

- bei dem die erste Netzeinheit eine Mobilvermittlungsstelle (MSC) und die zweite Netzeinheit eine Basisstationssteuerung (BSC) oder eine Basisstation (BTS) ist.

**4.** Verfahren nach einem der Ansprüche 1 bis 3,

- bei dem in der Mobilstation eine aktuelle Zeit aus der absoluten Zeit, der Zeitrahmeninformation, eine aktuellen Zeitrahmen und einer vorgegebenen Zeitrahmendauer bestimmt wird.

**5.** Verfahren nach einem der Ansprüche 1 bis 4,

- bei dem die zweite Netzeinheit der ersten Netzeinheit nach Erhalt der Zeitinformation jeweils eine Bestätigung sendet,
- bei dem in der ersten Netzeinheit jeweils eine Zeitdauer zwischen dem Senden der Zeitinformation und dem Empfang der Bestätigung bestimmt wird,
- bei dem die erste Netzeinheit die Zeitinformation und die zweite Netzeinheit die Bestätigung solange senden, bis die in der ersten Netzeinheit jeweils bestimmte Zeitdauer eine vorgegebene Schwelle unterschreitet,
- bei dem die erste Netzeinheit die Zeitdauer an die zweite Netzeinheit sendet, falls die Zeitdauer die vorgegebene Schwelle unterschreitet,
- bei dem die zweite Netzeinheit die absolute Zeit aus der Zeitinformation und der Zeitdauer bestimmt,
- bei dem der absoluten Zeit als Zeitrahmeninformation eine Kennung desjenigen Zeitrahmens zugeordnet wird, der der absoluten Zeit entspricht.

**6.** Verfahren nach einem der Ansprüche 1 bis 5,

- bei dem die absolute Zeit und die Zeitrahmeninformation in einer Signalisierungsnachricht übermittelt werden, die zu einem Kanalaufbau, einer Prozedur zur Aktualisierung des Aufenthaltsortes, bei einer Anmeldung der Mobilstation an dem Funkkommunikationssystem, zur Übertragung einer SMS (Short Message Service)-Nachricht oder auf Anforderung des Teilnehmers, der die Mobilstation benutzt, übertragen wird.

**7.** Verfahren nach einem der Ansprüche 1 bis 6,

- bei dem zum Aufbau einer Verbindung zwischen der Mobilstation und dem Funkzugangsnetz die Mobilstation an eine Mobilvermittlungsstelle eine Verbindungsanfrage schickt,
- bei dem die Mobilvermittlungsstelle einer Basisstationssteuerung und die Basisstationssteuerung einer Basisstation einer Aufforderung zum Kanalaufbau sendet, wobei die Basisstation die absolute Zeit aus einer von der Mobilvermittlungsstelle aus einem Frequenznormal abgeleiteten Zeitinformation unter Berücksichtigung der Übertragungszeiten zwischen der Mobilvermittlungsstelle (MSC) und der Basisstationssteuerung (BSC) sowie der Basisstationssteuerung (BSC) und der Basisstation (BTS) bestimmt,
- bei dem die Basisstation (BTS) der absoluten Zeit als Zeitrahmeninformation eine Kennung eines der absoluten Zeit entsprechenden Zeitrahmens zuordnet,
- bei dem die absolute Zeit und die Zeitinformation in einer Signalisierungsnachricht, in der der Kanalaufbau bestätigt wird, von der Basisstation (BTS) zur Basisstationssteuerung (BSC) und von der Basisstationssteuerung (BSC) zur Mobilvermittlungsstelle (MSC) übertragen wird,
- bei dem die absolute Zeit und die Zeitinformation in einer Signalisierungsnachricht zur Kanalfestsetzung von der Mobilvermittlungsstelle (MSC) zur Mobilstation (MS) gesendet werden.

# FIG 1

```
        ┌─────┐                      ┌─────┐
        │ MSC │                      │ BSC │
        └─────┘                      └─────┘
           │                            │
           │   Time_Set (absolut time)  │
           │───────────────────────────▶│
      ┌    │                            │
deltaT┤    │   Time_Confirm (setted)    │
      └    │◀───────────────────────────│
           │                            │
für deltaT>60ms  Time_Set (absolut time)│
           │───────────────────────────▶│
      ┌    │                            │
deltaT┤    │   Time_Confirm (setted)    │
      └    │◀───────────────────────────│
           │                            │
           │                            │
für deltaT<60ms  Time_Correct (deltaT)  │
           │───────────────────────────▶│
           │                            │
           │ Time_Set_End (setted time) │   Tabs=absolut time+deltaT/2
           │◀───────────────────────────│
           │                            │
```

$T_{abs} = absolut\ time + deltaT/2$

# FIG 2

```
 MSC            BSC                       BTS        MS
  │              │                         │         │
  │              │                         │ call request
  │◄─────────────────────────────────────────────────│
  │              │                         │         │
  │  Channel Establish                     │         │
  │─────────────────────────►│             │         │
  │              │                         │         │
  │              │  Channel Activation (absolute time)│
  │              │────────────────────────►│         │
  │              │                         │         │
  │              │   Channel Activation_ACK          │
  │              │ (absolute time,related frame number)
  │              │◄────────────────────────│         │
  │              │                         │         │
  │  BTS_time for channel establishment    │         │
  │ (absolute time,related frame number)   │         │
  │◄─────────────│                         │         │
  │              │                         │         │
  │      establish channel                 │         │
  │ (absolute time,related frame number)   │         │
  │─────────────────────────────────────────────────►│
  │              │                         │         │
```

EP 1 394 641 A1

**Europäisches**
**Patentamt**

# EUROPÄISCHER RECHERCHENBERICHT

Nummer der Anmeldung

EP 02 01 9589

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | EP 1 032 186 A (NOKIA MOBILE PHONES LTD) 30. August 2000 (2000-08-30) <br> * Zusammenfassung * <br> * Spalte 2, Zeile 8-28 * <br> * Spalte 4, Zeile 38 - Spalte 5, Zeile 48 * <br> * Ansprüche * <br> --- | 1-7 | G04G5/00 <br> H04B7/26 |
| A | DE 100 60 163 A (MUELLER ALBRECHT) 6. Juni 2002 (2002-06-06) <br> * Zusammenfassung * <br> * Spalte 1, Zeile 39-56 * <br> * Anspruch 1 * <br> --- | 1-7 | |
| A | FR 2 803 477 A (SAGEM) 6. Juli 2001 (2001-07-06) <br> * Zusammenfassung * <br> * Seite 1, Zeile 21 - Seite 2, Zeile 11 * <br> * Seite 5, Zeile 15 - Seite 6, Zeile 6 * <br> * Ansprüche * <br> --- | 1-7 | |
| A | WO 00 38361 A (ERICSSON TELEFON AB L M) 29. Juni 2000 (2000-06-29) <br> * Zusammenfassung * <br> * Seite 2, Zeile 17 - Seite 3, Zeile 10 * <br> * Ansprüche * <br> --- | 1-7 | RECHERCHIERTE SACHGEBIETE (Int.Cl.7) <br><br> H04B <br> G04G <br> H04M <br> H04Q |
| A | US 6 373 834 B1 (LUNDH PETER CARL BIRGER ET AL) 16. April 2002 (2002-04-16) <br> * das ganze Dokument * <br> ----- | 1-7 | |

Der vorliegende Recherchenbericht wurde für alle Patentansprüche erstellt

| Recherchenort | Abschlußdatum der Recherche | Prüfer |
|---|---|---|
| DEN HAAG | 26. Februar 2003 | Dejonghe, O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 02 01 9589

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-02-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 1032186 | A | 30-08-2000 | GB | 2347313 A | 30-08-2000 |
| | | | EP | 1032186 A2 | 30-08-2000 |
| DE 10060163 | A | 06-06-2002 | DE | 10060163 A1 | 06-06-2002 |
| FR 2803477 | A | 06-07-2001 | FR | 2803477 A1 | 06-07-2001 |
| | | | DE | 10065484 A1 | 12-07-2001 |
| | | | GB | 2362787 A | 28-11-2001 |
| WO 0038361 | A | 29-06-2000 | AU | 3093700 A | 12-07-2000 |
| | | | CN | 1335000 T | 06-02-2002 |
| | | | EP | 1142176 A2 | 10-10-2001 |
| | | | JP | 2002533990 T | 08-10-2002 |
| | | | WO | 0038361 A2 | 29-06-2000 |
| | | | TW | 448668 B | 01-08-2001 |
| US 6373834 | B1 | 16-04-2002 | AU | 752818 B2 | 03-10-2002 |
| | | | AU | 1989999 A | 12-07-1999 |
| | | | CA | 2315077 A1 | 01-07-1999 |
| | | | CN | 1285100 T | 21-02-2001 |
| | | | EP | 1040609 A1 | 04-10-2000 |
| | | | WO | 9933207 A1 | 01-07-1999 |
| | | | TW | 432838 B | 01-05-2001 |

EPO FORM P0461

Für nähere Einzelheiten zu diesem Anhang : siehe Amtsblatt des Europäischen Patentamts, Nr.12/82